# EUROPÄISCHE PATENTSCHRIFT

(11) **EP 0 663 878 B1**
(45) Veröffentlichungstag und Bekanntmachung des Hinweises auf die Patenterteilung: **12.11.1997**
(21) Anmeldenummer: 94921588.3
(22) Anmeldetag: 22.07.1994
(51) Int. Cl.: B63B 21/04

(54) **LEINENEINFÄDLER**
DEVICE FOR PASSING A LINE ROUND AN OBJECT
ENFILEUR DE CORDE

(30) Priorität: 17.08.1993 DE 4327605
(43) Veröffentlichungstag der Anmeldung: 26.07.1995
(73) Patentinhaber: Bertram, Klaus, D-40474 Düsseldorf (DE)
(72) Erfinder: Bertram, Klaus, D-40474 Düsseldorf (DE)
(74) Vertreter: Döring, Wolfgang, Dr.-Ing. Patentanwälte Hauck, Graalfs, Wehnert, Döring, Siemons
(86) Internationale Anmeldenummer: DE9400853
(87) Internationale Veröffentlichungsnummer: WO9505304

(56) Entgegenhaltungen:
- GB-A- 2 079 230
- GB-A- 2 130 157

## Beschreibung

Die vorliegende Erfindung betrifft eine Vorrichtung zum Legen einer Leine um eine entfernt angeordnete Stange, einen Ringabschnitt etc. mit einer Haltestange, an deren vorderem Ende ein Umlegteil angeordnet ist, das einen öffenbaren und schließbaren Teilring aufweist, an dem das Vorderende der umzulegenden Leine befestigbar ist.

Wenn man beispielsweise ein Boot an einer Stange, einem Bojenring, einem Kairing etc. festmachen will, so bereitet es Schwierigkeiten bei einer gewissen Entfernung, die Festmacherleine um die Stange, den Ringabschnitt etc. herum zu legen. Zur Erleichterung dieses Vorganges ist ein Leinen-Einfädler entwickelt worden, der im Schiffszubehörhandel erhältlich ist. Bei diesem bekannten Leinen-Einfädler wird eine Halteschiene an einen vorhandenen Bootshaken geschraubt. Bei Bedarf wird der Einfädler in die Schiene geschoben und rastet dort ein. Die Festmacherleine wird mit der Hilfsleine verbunden. Bei dem Einfädler (Umlegeteil) handelt es sich um ein teilringförmiges Element, das einen öffenbaren und schließbaren Haken aufweist. Zum Umlegen bzw. Einfädeln der Leine wird der Einfädler bzw. das Umlegeteil mit der Haltestange beispielsweise gegen ein Bojenring gedrückt, wodurch der Haken verschwenkt und somit geöffnet wird. Der Haken weist eine Spezial-Doppelöffnung auf, die bewirkt, daß beim Zurückziehen des Einfädlers bzw. Umlegeteiles der Haken an seiner anderen Seite geöffnet wird, an der die Festmacherleine fixiert ist, so daß die Leine automatisch um den Ringabschnitt herum gezogen wird. Dieser Leinen-Einfädler ist in der Handhabung relativ kompliziert, und es bedarf einiges Geschicks, um eine einwandfreie Funktionsweise zu ermöglichen.

Der Erfindung liegt die Aufgabe zugrunde, eine Vorrichtung der angegebenen Art zu schaffen, die sich besonders einfach und bequem handhaben läßt.

Diese Aufgabe wird erfindungsgemäß bei einer Vorrichtung der angegebenen Art dadurch gelöst, daß die beiden Enden des Teilringes in bzw. an einer an der Haltestange angeordneten Führung zwischen einer ersten und zweiten Endstellung verschiebbar gelagert sind, wobei in der ersten Endstellung das erste Ende des Teilrings derart im Abstand von der Führung angeordnet ist, daß eine Eintrittsöffnung für die Stange, den Ringabschnitt etc. gebildet wird, und in der zweiten Endstellung das zweite Ende des Teilrings derart im Abstand von der Führung angeordnet ist, daß eine Austrittsöffnung für die Stange, den Ringabschnitt etc. unter Mitnahme der Leine gebildet wird.

Bei der erfindungsgemäß ausgebildeten Vorrichtung basiert somit das Öffnen und Schließen des Teilringes nicht auf dem Verschwenken eines Schließhakens, sondern auf einer Gleitbewegung der Teilringenden in oder an einer Führung, wodurch sich eine besonders gute Funktionsfähigkeit und Handhabung der Vorrichtung erreichen läßt. Wenn man eine Leine um einen Stange, einen Ringabschnitt etc. legen will, wird zuerst das umzulegende vordere Ende der Leine oder einer damit verbundenen Hilfsleine am Teilring lösbar befestigt. Die Haltestange wird dann zusammen mit der umzulegenden Leine ergriffen. Der Teilring befindet sich hierbei in der ersten Endstellung, d.h. das erste Ende des Teilrings ist derart im Abstand von der Führung angeordnet, daß eine Eintrittsöffnung für die Stange, den Ringabschnitt etc. gebildet wird. In dieser Stellung wird durch Bewegen der Vorrichtung die Stange, der Ringabschnitt etc. durch die Eintrittsöffnung in den Teilring hineingeführt. Durch Heranziehen der Haltestange stößt die zu umlegende Stange bzw. der zu umlegende Ringabschnitt gegen den gegenüberliegenden Endbereich des Teilringes und übt auf diesen Endbereich eine Kraft aus, die ein Verschieben der beiden Enden des Teilringes in bzw. an der Führung bis in die zweite Endstellung bewirkt, in der das zweite Ende des Teilringes derart im Abstand von der Führung angeordnet ist, daß eine Austrittsöffnung für die Stange, den Ringabschnitt etc. unter Mitnahme der Leine gebildet wird. Durch diese Austrittsöffnung wird dann die Stange herausgeführt. Durch erneutes Heranziehen der Vorrichtung kann nunmehr das teilringfixierte Ende der umzulegenden Leine ergriffen werden, so daß der Umlege- bzw. Einfädelvorgang beendet ist.

Wesentlich ist bei der erfindungsgemäßen Lösung, daß der zum Einführen und Herausführen der Stange mit umgelegter Leine erforderliche Öffnungs- und Schließvorgang des Teilringes durch eine lineare Gleitbewegung zwischen den Enden des Teilringes und der Führung erreicht wird und nicht durch eine Schwenkbewegung, für die entsprechende Gelenke erforderlich sind, die anfällig gegen Festsitzen sind. Der Einfädelvorgang der Stange bzw. des Ringabschnittes in den Teilring der erfindungsgemäßen Vorrichtung erfolgt auch nicht wie bei dem eingangs genannten Stand der Technik durch einen Stoßvorgang, sondern durch ein Hintergreifen der Stange bzw. des Ringabschnittes mit der erfindungsgemäß ausgebildeten Vorrichtung und einen Heranziehvorgang der Vorrichtung, durch den dann auch die Verschiebung des Teilringes entlang der Führung erreicht wird. Diese Bewegungen sind besonders einfach auszuführen und benötigen kein besonderes Geschick. Die Haltestange kann dabei schräg zur Führung angeordnet sein, so daß sie den Einfädelvorgang der zu umlegenden Stange in den Teilring hinein unterstützt.

Der hier verwendete Begriff Teilring ist nicht nur auf kreisrunde Ausführungsformen begrenzt. Es können alle beliebigen Ringquerschnitte Verwendung finden, beispielsweise auch Rechteckquerschnitte. Ausführungsformen mit gekrümmten Innenflächen werden jedoch bevorzugt, um ein einwandfreies Hineingleiten bzw. Herausgleiten der zu umlegenden Stange ohne scharfe Ecken und Kanten zu ermöglichen.

Beim Herausführen der Stange nimmt diese die mit ihrem Ende am Teilring fixierte Leine mit, so daß der gewünschte Umschlingungseffekt erreicht ist. Wird nunmehr die Vorrichtung von der sie handhabenden Person herangezogen, kann das Leinenende wieder vom Teilring gelöst werden. Geeignete Befestigungsvorrichtungen zur lösbaren Anbringung des Seilendes am Teilring sind dem Fachmann bekannt, so daß an dieser Stelle im einzelnen hierauf nicht mehr eingegangen werden muß. Beispielsweise können federvorgespannte Klemmvorrichtungen Verwendung finden.

Auch die erfindungsgemäß angeordnete Führung kann in mannigfacher Weise ausgebildet sein. Es kann sich beispielsweise hierbei um eine Innenführung handeln, in der die beiden Enden des Teilringes gleitend geführt sind. Auch eine Außenführung kann zur Anwendung gelangen, die beispielsweise von den beiden Enden gleitend umgriffen wird. Der Teilring selbst sowie seine beiden Enden besitzen vorzugsweise einen runden Querschnitt, so daß auch die Führung vorzugsweise runde, als Führung dienende Innen- oder Außenflächen aufweist. Die beiden Endstellungen der Enden des Teilringes werden zweckmäßigerweise durch einen geeigneten Anschlag in oder an der Führung erreicht.

Die erfindungsgemäß ausgebildete Vorrichtung ist vorzugsweise als Schiffszubehör geeignet und dient zum Legen einer Festmacherleine um ein entsprechendes Halteelement, beispielsweise eine Stange, einen Bojenring, Keilring etc. Die Erfindung ist jedoch nicht auf diesen Anwendungszweck beschränkt. Sie ist vielmehr ganz allgemein für solche Fälle geeignet, bei denen eine Leine, ein Seil etc. aus einer bestimmten Entfernung um einen Gegenstand gelegt werden soll, beispielsweise auch beim Legen von Seilen um Äste u. dgl. Es versteht sich, daß hierbei der zwischen der Führung und dem Teilring gebildete Hohlraum je nach Anwendungsfall unterschiedlich groß ausgebildet sein kann.

Eine spezielle Ausführungsform der Erfindung zeichnet sich dadurch aus, daß der Teilring benachbart zum ersten Ende einen gering gekrümmten oder schrägen Abschnitt und benachbart zum zweiten Ende einen stark gekrümmten oder senkrecht zur Führung verlaufenden Abschnitt aufweist. Durch diese Ausgestaltung wird einerseits der Einführvorgang der zu umlegenden Stange etc. in den Innenraum des Teilrings unterstützt, weil die Stange an dem gering gekrümmten oder schrägen Abschnitt entlanggleiten kann. Andererseits wird das Öffnen des Teilringes gefördert, weil die Stange etc. gegen den hierzu im wesentlichen quer verlaufenden Teilringabschnitt stößt und hierdurch den Teilring relativ zur Führung verschiebt.

Vorzugsweise bildet der Führungsabschnitt benachbart zum ersten Ende des Teilringes mit der Haltestange einen spitzen Winkel. Wie bereits erwähnt, wird hierdurch der Einfädelvorgang der Stange etc. in den Teilring hinein unterstützt, da die Stange an der Haltestange entlanggleiten kann. Darüber hinaus ist eine solche Schräglage der Haltestange relativ zur Führung besonders geeignet, um die zu umlegende Stange mit der erfindungsgemäß ausgebildeten Vorrichtung in geeigneter Weise hintergreifen und in den Teilring hinein einfädeln zu können.

Andere Winkellagen der Haltestange zur Führung sind ebenfalls möglich und richten sich nach dem jeweiligen Anwendungsfall. Um beispielsweise bei an Kaimauern nach unten hängenden Ringen ein Einfädeln einer Leine zu ermöglichen, wird eine Ausführungsform bevorzugt, bei der die Haltestange relativ zur Führung im rechten Winkel angeordnet ist, so daß hierdurch ein seitliches Hintergreifen des Ringes mit Hilfe der erfindungsgemäß ausgebildeten Vorrichtung möglich ist. Andere Winkellagen bis 180° sind ebenfalls möglich.

Die erfindungsgemäß ausgebildete Vorrichtung besteht im wesentlichen aus Haltestange und Umlegeteil, wobei das Umlegeteil mit seiner Führung am vorderen Ende der Haltestange angeordnet ist. Es kann sich hierbei um eine dauerhafte oder um eine lösbare Verbindung handeln. Vorzugsweise ist die Verbindung lösbar, da auf diese Weise die Haltestange auch für andere Verwendungszwecke eingesetzt werden kann. Zum Anbringen eines Umlegeteiles dient vorzugsweise eine einfache Schnapp- bzw. Rastverbindung, bei der keine langen und aufwendigen Handhabungsvorgänge erforderlich sind.

Als Material für die Vorrichtung kommen vorzugsweise geeignete Kunststoffe und Metalle zur Anwendung.

Für die Funktionsweise der erfindungsgemäßen Vorrichtung ist es wesentlich, daß eine einwandfreie Gleitfühung zwischen der Führung und den Enden des Teilringes sichergestellt wird, wobei eine derartige Gleitführung ein Verkanten der Teilringenden relativ zur Führung nicht zulassen darf, um beim Austritt eines Endes des Teilringes aus der Führung ein einwandfreies Wiedereintreten desselben in die Führung zu ermöglichen. Um ein derartiges verkantungsfreies Führen der Enden in der Führung zu erreichen, weisen das erste und zweite Ende des Teilrings vorzugsweise parallel zur Führung verlaufende Gleitstücke auf, die relativ lang ausgebildet sind, damit es nicht zu dem erwähnten Verkanten kommen kann.

Bei einer besonders bevorzugten Ausführungsform der Erfindung ist der Winkel zwischen der Haltestange und der Führung verstellbar. Hierdurch kann man die beste Winkellage zwischen Führung und Haltestange für den jeweiligen Anwendungsfall wählen. Ein diese Möglichkeit eröffnender Verstellmechanismus weist vorzugsweise eine Drehführung für die Haltestange auf, die an der Führung befestigt ist. Die Haltestange ist dabei mit einem an einem elastischen Element gelagerten Rastknopf versehen, der je nach Winkellage in verschiedene Vertiefungen auf der Führung einsetzbar ist.

Die erfindungsgemäße Vorrichtung kann auch einen Feststellmechanismus zur Arretierung des Teilrings relativ zur Führung aufweisen. Hierdurch wird die Vorrichtung außer Funktion gesetzt und kann beispielsweise andere Funktionen erfüllen, z.B. als Bootshaken zum Heranziehen und/oder Abstoßen, als Stoßstange etc. Die Führung und Teilring können hierfür geeignet ausgeformt sein.

Die Erfindung wird nachfolgend anhand eines Ausführungsbeispiels in Verbindung mit der Zeichnung im einzelnen erläutert. Es zeigen:
- Figur 1: eine Draufsicht auf eine erfindungsgemäß ausgebildete Vorrichtung beim Einführen einer Stange;
- Figur 2: einen Schnitt durch einen Teil der Vorrichtung der Figur 1 entlang Linie A-A in Figur 1;
- Figur 3: eine entsprechende Ansicht wie Figur 1, wobei die Stange den Teilring relativ zur Führung verschoben hat; und
- Figur 4: eine entsprechende Ansicht wie Figur 1 und 2 nach dem Herausführen der Stange mit umgelegter Leine aus der Vorrichtung.

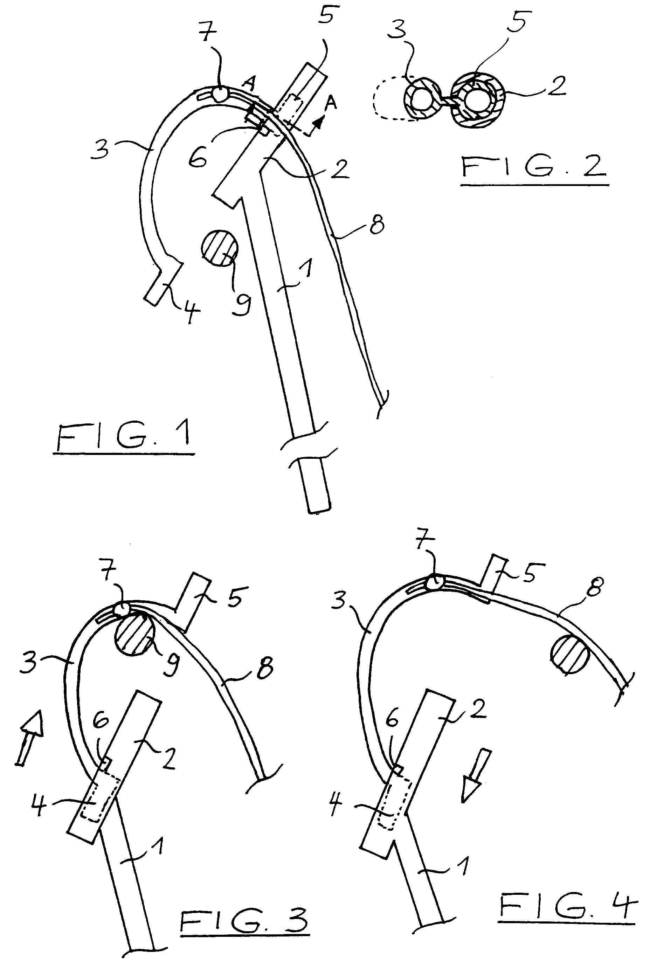

Die in Figur 1 gezeigte Vorrichtung zum Legen einer Leine um eine entfernt angeordnete Stange 9 besitzt eine Haltestange 1, die an ihrem in der Figur unteren Ende von einer Person ergriffen und bewegt werden kann. Am in der Figur oberen Ende ist die Haltestange 1 mit einem Umlegteil versehen, der aus einer direkt an der Haltestange 1 fixierten Führung 2 und einem relativ zur Führung verschiebbaren Teilring 3 besteht. Die Haltestange 1 bildet mit der Achse der Führung 2 in der Zeichnung nach unten gesehen einen spitzen Winkel und ist im in der Zeichnung unteren Endbereich der Führung 2 an dieser befestigt.

Haltestange 1, Führung 2 und Teilring 3 können jeweils einen kreisförmigen Rohrquerschnitt besitzen und aus einem geeigneten, relativ steifen Kunststoff bestehen.

Der Teilring 3 besitzt an seinem in der Figur unteren Endabschnitt eine relativ geringe Krümmung und an seinem in der Figur oberen Endabschnitt eine stärkere Krümmung. An beiden Enden des Teilringes 3 sind Gleitstücke 4, 5 angeordnet, die ebenfalls einen runden Rohrquerschnitt aufweisen und deren Längsachse parallel zur Führungsachse verläuft. In der Mitte der Führung 2 befindet sich ein Anschlag 6, der die Bewegung der Gleitstücke 4, 5 in der Führung begrenzt.

Wie Figur 2 zeigt, ist die Führung 2 als Innenführung ausgebildet, in der die Gleitstücke 4, 5 verschiebbar, aber nicht verkantbar geführt sind. Die beiden Endpositionen der Gleitstücke 4, 5 werden durch den Anschlag 6 bestimmt, wobei in der jeweiligen Endposition ein Gleitstück aus der Führung herausgetreten ist und zwischen Gleitstück und Führung eine Eintrittsöffnung bildet, wie in Figur 1 gezeigt, oder eine Austrittsöffnung vorsieht, wie in den Figuren 3 und 4 gezeigt.

Nachfolgend wird nunmehr die Funktionsweise der in den Figuren dargestellten Vorrichtung erläutert.

Die Vorrichtung befindet sich im Normalzustand in der in Figur 1 dargestellten Lage, in der das obere Gleitstück 5 am Anschlag 6 anliegt, so daß zwischen dem unteren Gleitstück 4 und der Führung eine Eintrittsöffnung für die zu umlegende Stange ausgebildet wird. An einer geeigneten am Teilring vorgesehenen Fixiereinrichtung wird das vordere Ende der um die Stange 9 zu legenden Leine 8 lösbar fixiert. Mittels der Haltestange 1 wird dann mit der Vorrichtung die Stange 9 hintergriffen und in den zwischen Teilring 3 und Führung 2 gebildeten Raum eingeführt. Durch weiteres Heranziehen der Vorrichtung durchläuft die Stange 9 den Raum zwischen Führung und Teilring und stößt gegen den oberen, stark gekrümmten Endabschnitt des Teilrings, wie in Figur 3 gezeigt. Hierdurch wird der Teilring 3 relativ zur Führung 2 verschoben, bis das untere Gleitstück 4 an den Anschlag 6 stößt. Durch Austreten des oberen Gleitstücks 5 aus der Führung entsteht dabei eine Austrittsöffnung für die Stange 9. Die Haltestange 1 wird jetzt von der die Vorrichtung handhabenden Person in der Figur nach links bewegt und dann wiederum herangezogen. Figur 4 zeigt, daß hierdurch die Stange 9 aus dem Raum zwischen dem Teilring 3 und der Führung 2 austritt und dabei das umgelegte Seil 8 mitführt. Durch vollständiges Heranziehen der Vorrichtung kann dann das Seilende von der Fixiervorrichtung 7 wieder gelöst werden, so daß der Umlegevorgang abgeschlossen ist.

## Patentansprüche

1. Vorrichtung zum Legen einer Leine um eine entfernt angeordnete Stange, einen Ringabschnitt etc. mit einer Haltestange, an derem vorderen Ende ein Umlegeteil angeordnet ist, das einen öffenbaren und schließbaren Teilring aufweist, an dem das Vorderende der umzulegenden Leine befestigbar ist, dadurch gekennzeichnet, daß die beiden Enden des Teilrings (3) in bzw. an einer an der Haltestange (1) angeordneten Führung (2) zwischen einer ersten und zweiten Endstellung verschiebbar gelagert sind, wobei in der ersten Endstellung das erste Ende des Teilrings (3) derart im Abstand von der Führung (2) angeordnet ist, daß eine Eintrittsöffnung für die Stange, den Ringabschnitt etc. gebildet wird, und in der zweiten Endstellung das zweite Ende des Teilrings (3) derart im Abstand von der Führung (2) angeordnet ist, daß eine Austrittsöffnung für die Stange, den Ringabschnitt etc. unter Mitnahme der Leine (8) gebildet wird.

2. Vorrichtung nach Anspruch 1, dadurch gekennzeichnet, daß der Teilring (3) benachbart zum ersten Ende einen gering gekrümmten oder schrägen Abschnitt und benachbart zum zweiten Ende einen stark gekrümmten oder senkrecht zur Führung (2) verlaufenden Abschnitt aufweist.

3. Vorrichtung nach Anspruch 1 oder 2, dadurch gekennzeichnet, daß der Führungsabschnitt benachbart zum ersten Ende des Teilrings (3) mit der Haltestange (1) einen spitzen Winkel bildet.

4. Vorrichtung nach einem der vorangehenden Ansprüche, dadurch gekennzeichnet, daß in bzw. an der Führung (2) ein Anschlag (6) für das erste und zweite Ende des Teilrings (3) angeordnet ist.

5. Vorrichtung nach einem der vorangehenden Ansprüche, dadurch gekennzeichnet, daß das erste und zweite Ende des Teilrings (3) parallel zur Führung verlaufende Gleitstücke (4, 5) aufweisen.

6. Vorrichtung nach einem der vorangehenden Ansprüche, dadurch gekennzeichnet, daß das Vorderende der Leine (8) benachbart zum zweiten Ende des Teilrings (3) angeordnet ist.

7. Vorrichtung nach einem der vorangehenden Ansprüche, dadurch gekennzeichnet, daß die Führung (2) lösbar an der Haltestange (1) befestigt ist.

8. Vorrichtung nach einem der vorangehenden Ansprüche, dadurch gekennzeichnet, daß der Winkel zwischen Haltestange (1) und Führung (2) verstellbar ist.

9. Vorrichtung nach einem der vorangehenden Ansprüche, dadurch gekennzeichnet, daß sie einen Feststellmechanismus zur Arretierung des Teilrings relativ zur Führung aufweist.

10. Vorrichtung nach Anspruch 9, dadurch gekennzeichnet, daß Führung oder Teilring als Bootshaken zum Heranziehen oder Abstoßen ausgebildet sind.

## Claims

1. A device for passing a line round a remotely located mooring post, a mooring ring portion etc., said device comprising a hand-held pole at the far end of which a line-hitching element is disposed which has an openable and closable part-ring at which the far end of the line to be passed can be mounted, characterized in that the two ends of the part-ring (3) are displacably mounted between a first and a second end position in or at a guideway (2) located at the hand-held pole (1), wherein, in the first end position, the first end of the part-ring (3) is spaced in such a manner from the guideway (2) that an inlet opening for the mooring post, the mooring ring portion etc. is formed, and, in the second end position, the second end of the part-ring (3) is spaced in such a manner from the guideway (2) that an exit opening for the mooring post, the mooring ring portion etc., with carrying along the line (8), is formed.

2. The device according to claim 1, characterized in that the part-ring (3) has a slightly curved or inclined portion adjacent to the first end and an intensively curved portion or portion extending perpendicularly to the guideway (2) adjacent to the second end.

3. The device according to claim 1 or 2, characterized in that the guide portion adjacent to the first end of the part-ring (3) forms together with the hand-held pole (1) an acute angle.

4. The device according to one of the preceding claims, characterized in that a stop member (6) for the first and second end of the part-ring (3) is disposed in or at the guideway (2).

5. A device according to one of the preceding claims, characterized in that the first and second end of the part-ring (3) have slide members (4, 5) extending parallel with respect to the guideway.

6. The device according to one of the preceding claims, characterized in that the far end of the line (8) is disposed adjacent to the second end of the part-ring (3).

7. The device according to one of the preceding claims, characterized in that the guideway (2) is removably fixed at the hand-held pole (1).

8. The device according to one of the preceding claims, characterized in that the angle between the hand-held pole (1) and the guideway is adjustable.

9. The device according to on of the preceding claims, characterized in that it includes a locking mechanism for locking the part-ring relative to the guideway.

10. The device according to claim 9, characterized in that the guideway or the part-ring is formed as boat hook for drawing near or pushing off.

## Revendications

1. Mécanisme d'accrochage à distance d'un câble autour d'une bitte d'amarrage, anneau d'accostage, etc. au moyen d'une perche équipée à l'avant d'un segment d'accrochage comportant un segment semi-annulaire muni d'un dispositif d'ouverture et de fermeture auquel peut être raccrochée une corde. Ce mécanisme est identifié par les caractéristiques suivantes: les deux extrémités du segment (3) peuvent être déplacées sur ou dans un guide (2) fixé sur la perche (1), entre une première ou deuxième position d'arrêt. Dans la première position d'arrêt, la première extrémité du segment semi-annulaire (3) est positionnée sur le guide de manière à former l'espace d'ouverture nécessaire à l'introduction d'une bitte, anneau ou point d'amarrage. Dans la deuxième position d'arrêt, la seconde extrémité du segment (3) est positionnée sur le guide (2) de manière à former l'espace nécessaire à la sortie d'une bitte, anneau, point d'amarrage, etc. en ramenant la corde (8).

2. Le mécanisme conforme au premier paragraphe est identifié par le fait que l'élément semi-annulaire (3) présente:
Une partie légèrement incurvée ou inclinée attenant à la première extrémité.
Une partie fortement incurvée ou formant une perpendiculaire par rapport au guide (2) attenant à la deuxième extrémité.

3. Le mécanisme conforme aux paragraphes 1 ou 2 est identifié par le fait que le segment du guide attenant à la première extrémité de l'élément semi-annulaire (3) forme un angle aigu par rapport à la perche (1).

4. Le mécanisme conforme à l'un des paragraphes précédents est identifié par le fait que sur ou dans le guide (2) dispose d'une butée (6) pour la première et la deuxième extrémité du segment semi-annulaire (3).

5. Le mécanisme conforme à l'un des paragraphes précédents est identifié par le fait que la première et la deuxième extrémité du segment semi-annulaire (3) disposent d'éléments de coulissement (4, 5) positionnés parallèlement au guide.

6. Le mécanisme conforme à l'un des paragraphes précédents est identifié par le fait que l'extrémité avant de la corde (8) est adjacente à la deuxième extrémité du segment semi-annulaire (3).

7. Le mécanisme conforme à l'un des paragraphes précédents est identifié par le fait que le guide (2) installé sur la perche (1) est amovible.

8. Le mécanisme conforme à l'un des paragraphes précédents est identifié par le fait que l'angle formé entre la perche (1) et le guide (2) est réglable.

9. Le mécanisme conforme à l'un des paragraphes précédents est identifié par le fait qu'il dispose d'un mécanisme d'arrêt pour le blocage du segment semi-annulaire par rapport au guide.

10. Le mécanisme conforme au paragraphe 9 est identifié par le fait que le guide ou le segment semi-annulaire sont conçus comme gaffe d'approche ou d'éloignement.
